# EUROPÄISCHE PATENTSCHRIFT

(11) **EP 3 202 654 B1**
(45) Veröffentlichungstag und Bekanntmachung des Hinweises auf die Patenterteilung: **03.08.2022**
(21) Anmeldenummer: 16002533.4
(22) Anmeldetag: 20.06.2009
(51) Int. Cl.: B62M 9/12

(54) **MEHRFACH-KETTENZAHNRAD FÜR EIN FAHRRAD**
MULTIPLE-CHAIN WHEEL ASSEMBLY FOR A BICYCLE
PIGNON MULTIPLE POUR VÉLO

(30) Priorität: 03.07.2008 DE 102008031162
(43) Veröffentlichungstag der Anmeldung: 09.08.2017
(62) Teilanmeldung aus: 09008107.6
(73) Patentinhaber: SRAM Deutschland GmbH, 97424 Schweinfurt (DE)
(72) Erfinder: Braedt, Henrik, 97456 Dittelbrunn (DE)
(74) Vertreter: Thum, Bernhard

(56) Entgegenhaltungen:
- EP-A2- 0 047 927
- EP-A2- 1 489 338
- DE-A1- 19 535 240
- JP-A- 2 164 684
- US-A- 4 047 603
- US-A- 5 087 226
- US-A1- 2005 014 590
- US-A1- 2005 032 596
- US-B1- 6 340 338

## Beschreibung

Die Erfindung betrifft eine Kombination aus einer Kette und einer Mehrfach-Kettenzahnrad. Insbesondere betrifft die Erfindung ein Mehrfach-Kettenzahnrad mit unterschiedlich großen Zahnkränzen zur Aufnahme einer Kette und zur Übertragung einer von dieser eingeleiteten Umfangkraft auf eine Nabe eines Hinterrades eines Fahrrades mit der Möglichkeit, die Kette durch eine Schalteinrichtung von einem auf einen anderen Zahnkranz zu wechseln, wobei der Zahnkranz und seine Zähne Schalthilfen aufweisen, die sowohl den Gangwechsel erleichtern, als auch zur Aufrechterhaltung des Eingriffs der Kette in die Verzahnung des Zahnkranzes verstärkt beitragen.

Gangwechsel an Mehrfach-Kettenzahnrädern können mit Hilfe eines Schaltwerkes inzwischen problemlos und sicher erfolgen, wobei vorausgesetzt werden muss, dass der Fahrer bestimmte Regeln beachtet. So ist es beispielsweise geraten, bei bestimmten Positionen der Kette auf den Zahnkränzen nicht leer rückwärts zu treten oder mehrere Gangstufen nicht auf einmal mit hohem Drehmoment zu schalten. Außerdem sind beim Schalten ausreichend hohe Drehzahlen an den Pedalen erforderlich.

Um kontrolliertes Schalten auf kleinere Zahnkränze zu ermöglichen, muss die Kette so lange auf dem Zahnkranz geführt werden, bis eine vorgegebene Position erreicht ist. In dieser Position laufen die Rollen beim Absteigen in die Zahnlücken des kleineren Zahnkranzes ein, so dass die Kette nicht auf dessen Zähnen aufreiten kann. Daraus ergibt sich ein nahezu ruckfreier Schaltvorgang, der auch unter Last durchgeführt werden kann. Das Problem beim kontrollierten Schalten auf den nächst kleineren Zahnkranz ist es, die Kette am sofortigen Absteigen unter Umgehung der vorgesehenen Positionen zu hindern. Auch wenn die Kette an den vorgesehenen Positionen absteigt, ist es noch nicht gewährleistet, dass die Kette durch seitlichen Versatz mit den Laschen auf den Zähnen aufreitet, obwohl die Rollen in der richtigen Position zu den Zahnlücken liegen.

Um die Schaltgeschwindigkeit ohne Überschaltwege am Schalter mit gleichzeitig sanftem Übergang der Kette zu erreichen, wurde eine Vielzahl von Verbesserungen vorgeschlagen, wie beispielsweise in dem US-Patent Nr. 475021 vom 11.11.1937, wo am Zahnkranz in beide Drehrichtungen Schaltgassen in die Verzahnung eingearbeitet wurden, um der Kette an einer Stelle des Umfangs einen geräuscharmen Übergang zu schaffen.

Gemäß dem Europäischen Patent EP 642975 B1 werden eine Vielzahl von Modifikationen an den Zähnen des Zahnkranzes und am Zahnkranz selbst vorgenommen, um das Schalten der Kette sowohl zum kleineren wie auch zum größeren Zahnkranz, insbesondere unter Last zu erleichtern, wobei es für beide Schaltrichtungen mindestens eine Position für das Überwechseln der Kette gibt. Dokument US 5 087 226 offenbart den Oberbegriff des Anspruchs 1.

Die genannten Vorschläge machen es Fahrern mit technischem Verständnis zwar einfacher, mit geringerer Fehlerhäufigkeit zu schalten, trotzdem wird einer internen Versuchsreihe zufolge mit einer Fehlerrate von 30 % zu rechnen sein. Schaltfehler aber können unter Last einen Kettenriss bewirken und zudem die Muskulatur des Fahrers einem kräftigen Ruck aussetzen, der zu Krämpfen während der Fahrt führen kann.

Aufgabe der vorliegenden Erfindung ist es, ein Mehrfach-Kettenzahnrad und eine Kombination aus einem solchen Mehrfach-Kettenzahnrad und einer Kette bereitzustellen, um den vorstehend geschilderten Problemen zu begegnen und die Fehlerhäufigkeit bei Schaltvorgängen zu reduzieren.

Diese Aufgabe wird mit einer Kombination aus einem Mehrfach-Kettenzahnrad und einer Kette gemäß Anspruch 1 gelöst.

Weiterbildungen der Erfindung finden sich in den abhängigen Ansprüchen wieder.

Die in dieser Erfindung vorgeschlagenen Lösungen konzentrieren sich auf spezielle Zahnkranzgeometrien und können so gezielt an die jeweilige Größe des fraglichen Zahnkranzes angepasst werden. Mehrere dieselbe Tendenz bewirkende Änderungen der Geometrie sind Aspekte der vorliegenden Erfindung, die zu einer optimalen Führung der Kette gegen die beim Schalten auftretenden Ablenkungskräfte führen:
- Die Zahnkranzbreite im Bereich des Fußkreises wird wesentlich erhöht, so dass sich die axiale Führung der Kette auf dem Zahnkranz im Wesentlichen durch einen Überstand des Teildurchmessers der Innenlaschen gegenüber dem Durchmesser der Rolle im Führungsbereich am Fußkreis des Zahnkranzes ergibt.
- Eine flache Führungsschräge verläuft am Zahn von einem Führungsbereich am Fußkreis ausgehend bis zum Bereich des obersten Anlagepunktes der Rolle an einer der Flanken des Zahnes, wodurch die Breite des Zahnes soweit nach oben hin reduziert wird, dass es nicht zum Festsetzen der Innenlaschen durch die hohe Zahnkranzbreite kommt. Beim Eintauchen der Rolle in jeweils einen Zahnlückengrund wird die Kette zum Zahnkranz ausgerichtet und zentriert sich, nachdem sie beim Schalten entweder von der Führungsschräge, oder von einer ersten Abweisfase abgewiesen wurde. Außenlaschen sind an der Führung der Kette nicht beteiligt. Es hat sich als zweckmäßig erwiesen, dass die Führungsschräge einen Winkel von 10° bis 20° zur Planfläche des Zahnkranzes aufweist. Bei kleineren Zahnkränzen wird der Winkel vorzugsweise in einem Bereich von 5° bis 15° liegen.
- Zur Zahnspitze hin folgt auf die Führungsschräge die deutlich stärker geneigte erste Abweisfase, die zum einen die Kette dann wieder abweist und in die Ausgangsposition auch dann zurück wirft, wenn starke Schaltkräfte die Kette trotz der vorbeschriebenen Führungsschräge soweit auslenken, dass sie unkontrolliert zum kleineren Zahnkranz hin abzusteigen droht. Zum anderen wirkt die erste Abweisfase auch als Einführschräge, wenn die Kette vom größeren auf den kleineren Zahnkranz kontrolliert absteigt und durch den dabei erzeugten Kettenbogen eine zu große Auslenkung bekommt. Hierbei wird die Kette wieder zurück gelenkt und verhindert, dass die Kette aufreitet. Die zweite Abweisfase dient auch dazu, die im Eingriff mit einem Zahnkranz befindliche Kette an der Zahnspitze nicht zum Eingriff gelangen zu lassen, sondern abzuweisen, um den ursprünglichen Eingriff der Kette beizubehalten.
- Auf die erste Abweisfase folgt eine zweite Abweisfase und bildet mit dieser eine First als oberste Erhebung des Zahnes. Die zweite Abweisfase ist kürzer und verläuft gegenüber der Planfläche des Zahnes steiler und weist daher vom First zu der zum kleineren Zahnkranz weisenden Planfläche des betreffenden Zahnkranzes einen Abstand von etwa einem Drittel der Zahnkranzbreite auf. Ein wesentliches Merkmal ist, dass die erste Abweisfase und die für das Schalten der Kette auf jeweils größere Zahnkränze notwendige zweite Abweisfase ohne vertikalen Übergangsbereich sind. Hierdurch ergibt sich eine optimale Ausnutzung der verfügbaren Zahnkranzbreite und auch eine verbesserte Schaltqualität bei unkontrollierten Schaltvorgängen über mehrere Zahnkränze hinweg.
- Die vorgeschlagene Zahnkranzgeometrie eignet sich vor allem zur Herstellung von gedrehten Rohlingen für gefräste Zahnkranz-Hohlkörper.

Kassettennaben gemäß dem Stand der Technik bestehen aus einer Vielzahl von Zahnkränzen, welche alle auf einem Mitnehmer einer Nabe des Hinterrades aufgereiht und mit dieser drehfest verbunden sind. Mehrfach-Kettenzahnräder der vorgeschlagenen Art sind jedoch nur aus zwei Teilen zusammengesetzt, nämlich einem größten Zahnkranz und dem Zahnkranz-Hohlkörper, die drehfest miteinander und mit dem Mitnehmer verbunden sind. Zur Herstellung eines Rohlings für den Zahnkranz-Hohlkörper wird dieser mit allen inneren und äußeren Konturen und Zahnkränzen aus dem Vollen gedreht. Gefräst werden die Zahnkranz-Hohlkörper an den Zahnlücken und unterhalb der Zahnkränze, um eine hinsichtlich Gewicht und Festigkeit optimierte Kassettennabe zu erstellen. Weitere Gewichtserleichterung erhält man, wenn die Zahnkranzbreite unterhalb des Fußkreises verringert wird, was mit ringförmigen Ausnehmungen erreichbar ist. Es können sehr dünne Wandstärken erzielt werden, die eine ausreichende Festigkeit für den Zahnkranz-Hohlkörper gewährleisten, wenn man auf Fräsoperationen unterhalb der Zahnkränze verzichten will.

Alles in allem sind es gemäß dieser Erfindung die folgenden vier mit einander verbundenen Elemente, welche eine Verbesserung der vorgeschlagenen Zahnkranzformen gegenüber dem Stand der Technik ausmachen können:
die Führungsschräge
die erste Abweisfase
die zweite Abweisfase und
das geringe axiale Spiel der Kette auf den Zahnkränzen im Bereich ihrer Fußkreise.

Die Erfindung hat es sich zur Aufgabe gemacht, ein Mehrfach-Kettenzahnrad zu schaffen, dessen Zahnkränze eine geometrische Form aufweisen, die zu einer optimalen Führung der Kette gegen die beim Schalten auftretenden Ablenkungskräfte führen. Es sollen Schaltfehler auch dann vermieden werden, wenn die Kette nicht in den vorgesehenen Positionen auf- oder absteigt. Außerdem soll ein Optimum zwischen Gewicht und Festigkeit erreicht werden.

Die Lösung der Aufgabe ist in den kennzeichnenden Teilen des Hauptanspruches und der beiden nebengeordneten Ansprüche beschrieben. Ausgestaltungen sind den jeweiligen Unteransprüchen zu entnehmen.

Anhand mehrerer Skizzen wird ein Mehrfach-Kettenzahnrad für eine Nabe am Hinterrad eines Fahrrades erläutert. Es zeigen:
- Fig. 1:: eine Kette mit einer Rolle und Innenlaschen auf einem Zahnkranz im Eingriff mit einem Zahn, dessen zum größeren Zahnkranz weisende Planfläche eine Führungsschräge aufweist, anschließend daran eine erste Abweisfase und eine zweite Abweisfase im Teilschnitt;
- Fig. 2:: ein Mehrfach-Kettenzahnrad, bestehend aus einem Zahnkranz-Hohlkörper und einem größten Zahnkranz auf einem Mitnehmer einer Nabe im Teilschnitt;
- Fig. 3:: einen Ausschnitt aus dem Zahnkranz-Hohlkörper mit der Ausgestaltung einer Zahnspitze sowie mit Ausnehmungen im Teilschnitt;
- Fig. 4:: eine Darstellung eines ringförmigen Führungsbereichs der Innenlaschen am Zahnkranz entlang seines Fußkreises als Skizze.

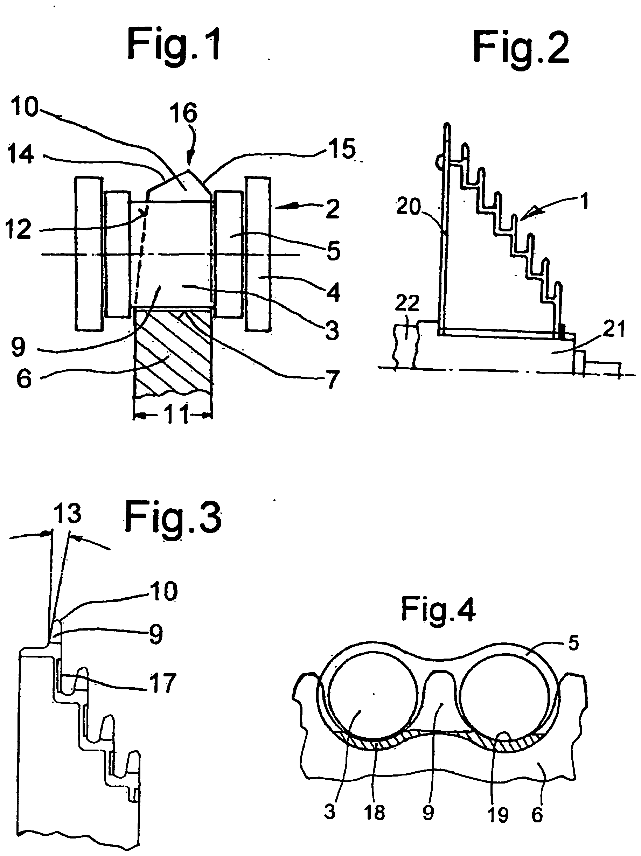

Gemäß der Fig. 1 wird im Teilschnitt ein Zahnkranz 6 eines Zahnkranz-Hohlkörpers 1 dargestellt, mit dem eine Kette 2 mit einer Rolle 3, einer Außenlasche 4 und einer Innenlasche 5 zusammen wirkt. Ferner ist ersichtlich, dass die Rolle 3 am Fußkreis 7 des Zahnkranzes 6 anliegt und die beiden Innenlaschen 5 einen Zahn 9 mit einer Zahnkranzbreite 11 mit einem geringen Spiel umschließen, wobei die Innenlaschen 5 zum Fußkreis 7 einen Überstand bilden, da sie gegenüber der Rolle 3 einen größeren Teildurchmesser aufweisen. Ein Zahn 9 weist eine Führungsschräge 12 zum jeweils größeren Zahnkranz 6 weisend auf, die sich vom Fußkreis 7 bis zu einer Zahnspitze 10 erstreckt und einen Winkel 13 bildet, wie aus der Fig. 3 ersichtlich ist. Der Winkel 13 wird vorzugsweise mit einer Größe von 10° bis 20° Winkelgraden ausgeführt. Die Kontur der Zahnspitze 10 wird ferner durch eine erste Abweisfase 14 und durch eine zweite Abweisfase 15 gebildet, wobei die erste Abweisfase 14 mit der zweiten Abweisfase 15 eine Dachform mit einem First 16 als höchste Erhebung bilden. Die weniger geneigte erste Abweisfase 14 und die Führungsschräge 12 nehmen in der Projektion entlang den Planflächen zusammen etwa zwei Drittel der gesamten Zahnkranzbreite 11 ein, während die zweite gegenüber dem First 16 befindliche stärker geneigte zweite Abweisfase 15 nur etwa ein Drittel der Zahnkranzbreite 11 einnimmt.

Die Fig. 2 zeigt ein Mehrfach-Kettenzahnrad bestehend aus einem größten Zahnkranz 20 und dem Zahnkranz-Hohlkörper 1. Der größte Zahnkranz 20 und der Zahnkranz-Hohlkörper 1 sind miteinander und mit einem Mitnehmer 21 drehfest verbunden, wobei der Mitnehmer 21 das eingeleitete Drehmoment an eine Nabe 22 des Fahrrades weiterleitet.

Aus der Fig. 3 geht ferner hervor, dass die nach radial innen weisende scheibenförmige Verlängerung der Zahnkränze 6 eine beim Drehen eingearbeitete Ausnehmung 17 aufweist, die so tief ist, dass das verbleibende scheibenförmige Material etwa die Hälfte der Zahnkranzbreite 11 ausmacht und eine gerade ausreichende Festigkeit für die Bearbeitung sowie für die Übertragung der von der Kette 2 eingeleiteten Drehmomente bringt. Durch diese Ausnehmungen 17 werden geringe Wandstärken im Innern des Zahnkranz-Hohlkörpers 1 erzielt mit dem Vorteil, dass dort zur Gewichtserleichterung keine weiteren Fräsoperationen vorgenommen werden müssen. Da das Rohteil des Zahnkranz-Hohlkörpers 1 aus dem Vollen hauptsächlich durch Drehoperationen entsteht, wird die erfindungsgemäße Kontur der Zahnkränze 6 bei diesem Arbeitsgang fertig bearbeitet. Zu dieser Kontur zählen die Führungsschräge 12, die erste Abweisfase 14, die zweite Abweisfase 15, die zum kleineren Zahnkranz 6 weisende Planfläche und ferner auch die Ausnehmungen 17. Diese Ausnehmungen 17 haben den Vorteil, dass an den Zähnen 9 Fräsoperationen vorgenommen werden können, ohne auf die filigrane Struktur des Zahnkranz-Hohlkörpers 1 zu verzichten. Schließlich zeigt die Fig. 4 einen Teilbereich des Zahnkranzes 6 mit drei Zähnen 9, wie zwei Rollen 3 mit einer Innenlasche 5 sich in einen Zahnlückengrund 19 einfügen und hierdurch einen Führungsbereich 18 erzeugen, der sich im Bereich des Fußkreises 7 mit einer Breite um den Zahnlückengrund 19 bildet, die dem Überstand, nämlich dem Unterschied zwischen dem Durchmesser der Rolle 3 und dem Teildurchmesser der Innenlasche 5, entspricht. In diesem Führungsbereich 18 ist das Spiel zwischen der Zahnkranzbreite 11 und dem durch die Rolle 3 bestimmten Abstand der Innenlaschen 5 am kleinsten.

### Bezugszeichenliste

- 1.: : Zahnkranz-Hohlkörper
- 2.: : Kette
- 3.: : Rolle
- 4.: : Außenlasche
- 5.: : Innenlasche
- 6.: : Zahnkranz
- 7.: : Fußkreis
- 8.: : Überstand
- 9.: : Zahn
- 10.: : Zahnspitze
- 11.: : Zahnkranzbreite
- 12.: : Führungsschräge
- 13.: : Winkel
- 14.: : erste Abweisfase
- 15.: : zweite Abweisfase
- 16.: : First
- 17.: : Ausnehmung
- 18.: : Führungsbereich
- 19.: : Zahnlückengrund
- 20.: : größter Zahnkranz
- 21.: : Mitnehmer
- 22.: : Nabe

## Patentansprüche

1. Kombination aus einer Kette und einem Mehrfach-Kettenzahnrad mit unterschiedlich großen Zahnkränzen zur Aufnahme einer Kette (2), die mit Rollen (3), außenliegenden Laschen (4) und innenliegenden Laschen (5) ausgebildet ist, und zur Übertragung einer von dieser eingeleiteten Umfangkraft auf eine Nabe eines Hinterrades eines Fahrrades mit der Möglichkeit, die Kette (2) durch eine Schalteinrichtung von einem auf einen anderen Zahnkranz (6) zu wechseln, wobei der Zahnkranz (6) und seine Zähne Schalthilfen aufweisen, die sowohl den Gangwechsel erleichtern, als auch zur Aufrechterhaltung des Eingriffs der Kette (2) in die Verzahnung des Zahnkranzes verstärkt beitragen,
wobei der Zahnkranz (6) zur Führung der Kette (2) im Bereich seines Fußkreises (7) eine Zahnkranzbreite (11) aufweist, die kleiner ist, als der von einer Rolle (3) der Kette (2) bestimmte Abstand der Innenlaschen (5) voneinander, wobei das sich hieraus ergebende geringe Spiel der Kette (2) am Zahn (9) auf einen Führungsbereich (18) eines Zahnlückengrundes (19) bezieht,
**dadurch gekennzeichnet, dass** die Zähne (9) an der dem größeren Zahnkranz (6) zugewandten Seite eine flache Führungsschräge (12) aufweisen, die in Richtung von der Zahnspitze (10) zum Fußkreis (7) verläuft, wo der Zahnkranz (6) seine volle Zahnkranzbreite (11) erreicht, wobei die Kette (2) am Fußkreis (7) durch einen Uberstand der Innenlaschen (5) gegenüber der Rolle (3) einen Führungsbereich (18) bildet, und dass sich die axiale Führung der Kette (2) auf dem Zahnkranz (6) durch den Überstand (8) der Innenlaschen (5) gegenüber der Rolle (3) im Führungsbereich (18) am Fußkreis (7) des Zahnkranzes (6) ergibt, wobei in einem Eingriffszustand zwischen Kette (2) und Zahnkranz (6), in dem zwei Rollen (3), die über eine Innenlasche (5) miteinander verbunden sind, sich in einen Zahnlückengrund (19) einfügen, der Führungsbereich (18) der Innenlasche (5) am Zahnlückengrund (19) vorgesehen ist, der sich im Bereich des Fußkreises (7) mit einer Breite um den Zahnlückengrund (19) herum bildet, die dem Überstand (8) entspricht.

2. Kombination aus einer Kette und einem Mehrfach-Kettenzahnrad nach Anspruch 1,
**dadurch gekennzeichnet, dass** die Führungsschräge (12) einen Winkel (13) zur Planfläche des Zahnkranzes (6) aufweist, der innerhalb eines Bereiches von 10° bis 20° liegt.

3. Kombination aus einer Kette und einem Mehrfach-Kettenzahnrad nach Anspruch 1 oder 2,
**dadurch gekennzeichnet, dass** die Führungsschräge (12) bei kleinen Zahnkränzen (6) einen Winkel (13) zur Planfläche des Zahnkranzes (6) aufweist, der innerhalb eines Bereiches von 5° bis 15° liegt.

4. Kombination aus einer Kette und einem Mehrfach-Kettenzahnrad nach einem der Ansprüche 1 bis 3,
**dadurch gekennzeichnet, dass** die Führungsschräge (12) durch eine Drehoperation bereits am Rohling des Zahnkranz-Hohlkörpers (1) angebracht wird.

5. Kombination aus einer Kette und einem Mehrfach-Kettenzahnrad nach einem der Ansprüche 1 bis 4,
**dadurch gekennzeichnet, dass** eine Zahnspitze (10) eine auf die Führungsschräge (12) in Richtung von der Zahnspitze (10) zum Fußkreis (7) folgende erste Abweisfase (14) aufweist, die mit einer zum jeweils kleineren Zahnkranz (6) weisenden zweiten Abweisfase (15) eine Dachform mit einem First (16) an der Zahnspitze (10) bildet.

6. Kombination aus einer Kette und einem Mehrfach-Kettenzahnrad nach Anspruch 5,
**dadurch gekennzeichnet, dass** die erste Abweisfase (14) und die zweite Abweisfase (15) durch eine Drehoperation bereits am Rohling des Zahnkranz-Hohlkörpers (1) angebracht werden.

7. Kombination aus einer Kette und einem Mehrfach-Kettenzahnrad nach Anspruch 5 oder 6,
**dadurch gekennzeichnet, dass** der First (16) von der zum kleineren Zahnkranz (6) weisenden Planfläche des betreffenden Zahnkranzes (6) einen Abstand von etwa einem Drittel der Zahnkranzbreite (11) aufweist.

8. Kombination aus einer Kette und einem Mehrfach-Kettenzahnrad nach einem der Ansprüche 5 bis 7,
**dadurch gekennzeichnet, dass** die zweite Abweisfase (15) bezogen auf den First (16) eine stärkere Neigung aufweist, als die erste Abweisfase (15).

9. Kombination aus einer Kette und einem Mehrfach-Kettenzahnrad nach einem der Ansprüche 5 bis 8,
**dadurch gekennzeichnet, dass** an den Planflächen der Zahnkränze (6) ringförmige Ausnehmungen (17) angeordnet sind.

10. Kombination aus einer Kette und einem Mehrfach-Kettenzahnrad nach einem der Ansprüche 5 bis 9,
**dadurch gekennzeichnet, dass** die Ausnehmungen (17) durch eine Drehoperation bereits am Rohling des Zahnkranz-Hohlkörpers (1) angebracht werden.

11. Kombination aus einer Kette und einem Mehrfach-Kettenzahnrad nach einem der Ansprüche 1 bis 10,
**dadurch gekennzeichnet, dass** in dem Führungsbereich (18) das seitliche Spiel zwischen der Zahnkranzbreite (11) und dem durch die Rolle (3) bestimmten Abstand der Innenlaschen (5) am kleinsten ist.

12. Kombination aus einer Kette und einem Mehrfach-Kettenzahnrad nach einem der vorangehenden Ansprüche,
**dadurch gekennzeichnet, dass** der Überstand durch den Unterschied zwischen dem Durchmesser der Rolle (3) und dem Teildurchmesser der Innenlasche (5) im Bereich der Rolle (3) bestimmt ist.

## Claims

1. Combination of a chain and a multiple sprocket wheel having different-size sprockets for receiving a chain (2) formed with rollers (3), outer plates ( 4) and inner plates (5), and for transmitting a circumferential force introduced by the chain to a hub of a bicycle's rear wheel, providing the option to shift the chain (2) from one sprocket to another (6) by means of a shifting device, the sprocket (6) and its teeth having shifting aids which both facilitate the gear change and make a more substantial contribution to keeping the chain (2) engaged with the teeth of the sprocket,
wherein the sprocket (6) for guiding the chain (2) in the region of its root circle (7) has a sprocket width (11) that is smaller than the distance between the inner plates (5) determined by a roller (3) of the chain (2), wherein the resulting little play of the chain (2) on the tooth (9) relates to a guide portion (18) of a tooth gap bottom (19),
**characterized in that** the teeth (9) arranged on the side facing the larger sprocket (6) have a flat guide inclination (12) that extends from the tooth tip (10) to the root circle (7) where the sprocket (6) reaches its maximum sprocket width (11), wherein the chain (2) forms a guide portion (18) at the root circle (7) through a projection of the inner plates (5) relative to the roller (3), and **in that** axial guidance of the chain (2) on the sprocket (6) is produced by the projection (8) of the inner plates (5) relative to the roller (3) in the guide portion (18) at the root circle (7) of the sprocket (6), wherein in an engagement state between the chain (2) and the sprocket (6), in which two rollers (3) connected to one another via an inner plate (5) fit into a tooth gap bottom (19), the guide portion (18) of the inner plate (5) is provided at the tooth gap bottom (19) that is formed in the region of the root circle (7) with a width around the tooth gap bottom (19) that corresponds to the projection (8).

2. Combination of a chain and a multiple sprocket wheel according to claim 1, **characterized in that** the guide inclination (12) has a 10° to 20° angle (13) to the plane surface of the sprocket (6).

3. Combination of a chain and a multiple sprocket wheel according to claim 1 or 2, **characterized in that**, in the case of small sprockets (6), the guide inclination (12) has a 5° to 15° angle (13) to the plane surface of the sprocket (6).

4. Combination of a chain and a multiple sprocket wheel according to any one of claims 1 to 3,
**characterized in that** the guide inclination (12) is already applied to the blank of the sprocket hollow body (1) during a turning operation.

5. Combination of a chain and a multiple sprocket wheel according to any one of claims 1 to 4,
**characterized in that** a tooth tip (10) has a first deflection chamfer (14) following the guide inclination (12) from the tooth tip (10) to the root circle (7), which, together with a second deflection chamfer (15) pointing to the respective smaller sprocket (6), produces a roof shape with a ridge (16) at the tooth tip (10).

6. Combination of a chain and a multiple sprocket wheel according to claim 5, **characterized in that** the first deflection chamfer (14) and the second deflection chamfer (15) are already applied to the blank of the sprocket hollow body (1) during a turning operation.

7. Combination of a chain and a multiple sprocket wheel according to claim 5 or 6, **characterized in that** the ridge (16) has a distance of about one third of the sprocket width (11) from the plane surface of the relevant sprocket (6) that points to the smaller sprocket (6).

8. Combination of a chain and a multiple sprocket wheel according to any one of claims 5 to 7,
**characterized in that**, with respect to the ridge (16), the second deflection chamfer (15) has a stronger inclination than the first deflection chamfer (15).

9. Combination of a chain and a multiple sprocket wheel according to any one of claims 5 to 8,
**characterized in that** annular recesses (17) are arranged on the plane surfaces of the sprockets (6).

10. Combination of a chain and a multiple sprocket wheel according to any one of claims 5 to 9,
**characterized in that** the recesses (17) are already applied to the blank of the sprocket hollow body (1) during a turning operation.

11. Combination of a chain and a multiple sprocket wheel according to any one of claims 1 to 10,
**characterized in that** lateral clearance between the sprocket width (11) and the distance between the inner plates (5) determined by the roller (3) is the smallest in the guide portion (18).

12. Combination of a chain and a multiple sprocket wheel according to any one of the preceding claims,
**characterized in that** the projection is determined by the difference between the diameter of the roller (3) and the partial diameter of the inner plate (5) in the region of the roller (3).

## Revendications

1. Combinaison d'une chaîne et d'un pignon multiple doté de couronnes dentées de différentes tailles pour recevoir une chaîne (2) qui est réalisée avec des rouleaux (3), des flasques extérieurs (4) et des flasques intérieurs (5), et pour transmettre une force circonférentielle induite par celle-ci à un moyeu d'une roue arrière d'un vélo avec la possibilité de faire passer la chaîne (2) d'une couronne dentée à une autre (6) par un dispositif de changement de vitesse, la couronne dentée (6) et ses dents présentant des aides au changement de vitesse qui, à la fois, facilitent le changement de vitesse et contribuent de manière accrue au maintien de l'engrènement de la chaîne (2) dans la denture de la couronne dentée,
dans laquelle la couronne dentée (6) comprend, pour le guidage de la chaîne (2) dans la zone de son cercle de pied (7), une largeur de couronne dentée (11) qui est inférieure à la distance des flasques intérieurs (5) entre eux, déterminée par un rouleau (3) de la chaîne (2), le faible jeu de la chaîne (2) sur la dent (9) qui en résulte se rapportant à une zone de guidage (18) d'un fond d'entredent (19),
**caractérisée en ce que** les dents (9) comprennent, sur le côté tourné vers la couronne dentée (6) plus grande, une rampe de guidage plate (12) qui s'étend dans la direction allant de la pointe de dent (10) au cercle de pied (7), où la couronne dentée (6) atteint sa pleine largeur de couronne dentée (11), dans laquelle la chaîne (2) forme une zone de guidage (18) au niveau du cercle de pied (7) par un dépassement des flasques intérieurs (5) par rapport au rouleau (3), et **en ce que** le guidage axial de la chaîne (2) sur la couronne dentée (6) résulte du dépassement (8) des flasques intérieurs (5) par rapport au rouleau (3) dans la zone de guidage (18) au niveau du cercle de pied (7) de la couronne dentée (6), dans laquelle, dans un état d'engrènement entre la chaîne (2) et la couronne dentée (6), dans lequel deux rouleaux (3) reliés l'un à l'autre par un flasque intérieur (5) s'insèrent dans un fond d'entredent (19), la zone de guidage (18) du flasque intérieur (5) est prévue sur le fond d'entredent (19) et se forme dans la zone du cercle de pied (7) avec une largeur autour du fond d'entredent (19) qui correspond au dépassement (8).

2. Combinaison d'une chaîne et d'un pignon multiple selon la revendication 1,
**caractérisée en ce que** la rampe de guidage (12) comprend un angle (13) par rapport à la surface plane de la couronne dentée (6) qui se situe dans une plage de 10° à 20°.

3. Combinaison d'une chaîne et d'un pignon multiple selon la revendication 1 ou 2,
**caractérisée en ce que** la rampe de guidage (12) présente, pour les petites couronnes dentées (6), un angle (13) par rapport à la surface plane de la couronne dentée (6) qui se situe dans une plage de 5° à 15°.

4. Combinaison d'une chaîne et d'un pignon multiple selon l'une des revendications 1 à 3,
**caractérisée en ce que** la rampe de guidage (12) est déjà réalisée sur l'ébauche du corps creux de couronne dentée (1) par une opération de tournage.

5. Combinaison d'une chaîne et d'un pignon multiple selon l'une des revendications 1 à 4,
**caractérisée en ce qu'**une pointe de dent (10) comprend un premier chanfrein de déviation (14) qui suit la rampe de guidage (12) dans la direction allant de la pointe de dent (10) au cercle de pied (7) et qui forme, avec un deuxième chanfrein de déviation (15) tourné vers la couronne dentée (6) respectivement plus petite, une forme de toit avec un faîte (16) sur la pointe de dent (10).

6. Combinaison d'une chaîne et d'un pignon multiple selon la revendication 5,
**caractérisée en ce que** le premier chanfrein de déviation (14) et le deuxième chanfrein de déviation (15) sont déjà réalisés sur l'ébauche du corps creux de couronne dentée (1) par une opération de tournage.

7. Combinaison d'une chaîne et d'un pignon multiple selon la revendication 5 ou 6,
**caractérisée en ce que** le faîte (16) est distant de la surface plane de la couronne dentée concernée (6), tournée vers la couronne dentée (6) plus petite, d'environ un tiers de la largeur de couronne dentée (11).

8. Combinaison d'une chaîne et d'un pignon multiple selon l'une des revendications 5 à 7,
**caractérisée en ce que** le deuxième chanfrein de déviation (15) présente, par rapport au faîte (16), une inclinaison plus forte que le premier chanfrein de déviation (15).

9. Combinaison d'une chaîne et d'un pignon multiple selon l'une des revendications 5 à 8,
**caractérisée en ce que** des évidements annulaires (17) sont disposés sur les surfaces planes des couronnes dentées (6).

10. Combinaison d'une chaîne et d'un pignon multiple selon l'une des revendications 5 à 9,
**caractérisée en ce que** les évidements (17) sont déjà réalisés sur l'ébauche du corps creux de couronne dentée (1) par une opération de tournage.

11. Combinaison d'une chaîne et d'un pignon multiple selon l'une des revendications 1 à 10,
**caractérisée en ce que**, dans la zone de guidage (18), le jeu latéral entre la largeur de couronne dentée (11) et la distance entre les flasques intérieurs (5) déterminée par le rouleau (3) est le plus faible.

12. Combinaison d'une chaîne et d'un pignon multiple selon l'une des revendications précédentes,
**caractérisée en ce que** le dépassement est déterminé par la différence entre le diamètre du rouleau (3) et le diamètre primitif du flasque intérieur (5) dans la zone du rouleau (3).
